# EUROPÄISCHE PATENTSCHRIFT

(11) **EP 0 810 280 B1**
(45) Veröffentlichungstag und Bekanntmachung des Hinweises auf die Patenterteilung: **28.08.2002**
(21) Anmeldenummer: 97106285.6
(22) Anmeldetag: 16.04.1997
(51) Int. Cl.: C12C 7/20, C12C 13/08

(54) **Vorrichtung zum Aufheizen der Würze bei der Bierherstellung**
Device for heating wort during beer production
Dispositif pour chauffer le moût au cours de la préparation de la bière

(30) Priorität: 30.05.1996 DE 29609642 U
(43) Veröffentlichungstag der Anmeldung: 03.12.1997
(73) Patentinhaber: Anton Steinecker Maschinenfabrik GmbH, 85356 Freising-Attaching (DE)
(72) Erfinder: Stippler, Kurt, Dr., 85417 Marzling (DE); Wasmuht, Klaus-Karl, 92792 Ellingen (DE)
(74) Vertreter: Grünecker, Kinkeldey, Stockmair & Schwanhäusser Anwaltssozietät

(56) Entgegenhaltungen:
- DE-A- 19 619 289
- DE-C- 4 304 383
- GB-A- 1 031 217

## Beschreibung

Die Erfindung betrifft eine Vorrichtung zum Erhitzen der Würze bei der Bierherstellung in einem Gefäß mit Innenkocher, insbesondere Röhreninnenkocher, entsprechend dem Oberbegriff des Anspruchs 1.

Bei der Bierherstellung wird nach dem Abläutern die Würze aufgeheizt und gekocht, um die Konzentration der Würze durch Verdampfen von überflüssigem Wasser in gewünschter Weise zu erhöhen. In diesem Prozeß werden zudem Enzyme zerstört und die Würze sterilisiert. Dieser Aufheizprozeß kann z.B. in der sogen. Würzepfanne durchgeführt werden. Während des Würzekochens in der Würzepfanne wird der Würze Hopfen in gewünschter Konzentration zu einem vorbestimmten Zeitpunkt beigefügt, der seine Bitterstoffe an die Würze abgibt. Nach Abschluß dieses Prozesses wird die Würze mit Hilfe einer Ausschlagpumpe zur weiteren Verarbeitung z.B. in einen Whirlpoolbehälter gepumpt, in dem der Heißtrub abgeschieden wird.

Die Prozesse, die in der Würzepfanne durchgeführt werden-im wesentlichen das Aufheizen, Kochen und Hopfen der Würze-und die Prozesse, die in dem Whirlpoolbehälter durchgeführt werden, können auch in einer kombinierten Würzepfannen- und Whirlpooleinrichtung ausgeführt werden. Aus diesem kombinierten Tank wird die klare Würze dann nach Abtrennung des Heißtrubes mit einer Ausschlagpumpe zur Weiterverarbeitung ausgepumpt.

Um Totzeiten zu vermeiden, die entstehen bevor die Würze in die Würzepfanne bzw. in das kombinierte Gefäß eingeführt wird, wird oftmals ein oder mehrere Vorlaufgefäße eingesetzt, wenn eine größere Zahl von Suden in Folge an einem Tag durchgeführt werden. Innerhalb eines solchen Vorlaufgefäßes befindet sich dann eine Kocheinrichtung, die zum Aufheizen der Würze dient. Nach dem Aufheizen der Würze in einem Vorlaufgefäß wird diese mit Hilfe einer Ausschlagpumpe in die Würzepfanne oder in die kombinierte Würzepfannen- und Whirlpooleinrichtung gepumpt.

Zur Aufheizung der Würze in derartigen Gefäßen werden häufig sogen. Innenkocher, im speziellen Röhreninnenkocher benutzt. Ein solcher Röhreninnenkocher ist in der Patentschrift DE 43 04 383 C1 für den Einsatz in einer Würzepfanne beschrieben. Der Innenkocher ist zentral auf dem Boden der Würzepfanne auf z.B. Stützen gelagert. Die Würze kann unter den Kocher gelangen und wird innerhalb des Röhrenkochers nach oben getrieben. Sie tritt aus dem Röhrenkocher an dessen oberem Ende aus und wird z.B. durch eine Prallplatte wiederum in der Würzepfanne verteilt. Aufheizvorgänge in einem Vorlaufgefäß bzw. in einem kombinierten Würzepfannen- und Whirlpoolbehälter finden auf ähnliche Art und Weise statt, wenn ein solcher Innenkocher eingesetzt wird.

Während des Aufheizvorganges in dem Gefäß ist die Würzetemperatur nicht homogen. Bis das Temperaturgefälle in dem Gefäß im wesentlichen ausgeglichen ist, wird der Innenkocher seinen Inhalt überhitzen und dadurch intervallweise nach oben ausstoßen. Der Würzekreislauf beim Aufheizen ist also nicht kontinuierlich. Während dieses Überhitzens kann es jedoch passieren, daß durch die Würze, bedingt durch die geringe Strömungsgeschwindigkeit, an der Innenwandung des Kochers Ablagerungen entstehen. Das verringert die Standzeit des Innenkochers und beeinträchtigt die Würzequalität.

In der Patentschrift DE 43 04 383 C1 wird deswegen für eine Würzepfanne ein Umwälzkreislauf vorgeschlagen. Der Umwälzkreislauf ist außerhalb der Würzepfanne angeordnet. Die Würze wird seitlich aus der Würzepfanne abgezogen und mit Hilfe einer Umwälzpumpe von unten, unterhalb des Röhreninnenkochers wieder in die Würzepfanne eingeführt. Auf diese Weise kann die Würze zwangszirkuliert und das intervallweise Ausstoßen und Überhitzen der Würze, im speziellen während des Aufheizvorganges, kann verhindert werden.

Für diese äußere Umwälzleitung sind umfangreiche technische Einrichtungen nötig. So muß eine zusätzliche Pumpe, die Umwälzpumpe, bereitgestellt werden, die eine ausreichende Kapazität hat.

Ausgehend von diesem Stand der Technik ist es daher die Aufgabe der vorliegenden Erfindung, eine Vorrichtung zur Verfügung zu stellen, die in der Würzepfanne, in einem Vorlaufgefäß oder einer kombinierten Würzekoch- und Whirlpooleinrichtung ein Zwangszirkulieren der Würze während des Aufheiz- bzw. Kochvorganges vor der Hopfengabe ermöglicht, die gegenüber dem Stand der Technik vereinfacht ist und kostengünstigere Ausgestaltung und Betrieb ermöglicht.

Erfindungsgemäß wird dazu eine Verbindungsleitung vorgesehen, die von der Ausschlagleitung stromabwärts der Ausschlagpumpe des Gefäßes abzweigt und unterhalb des Innenkochers wieder in das Gefäß zum Erhitzen der Würze mündet. Zusätzlich wird in der Ausschlagleitung und der Verbindungsleitung stromabwärts dieser Abzweigung je mindestens eine Absperrmöglichkeit vorgesehen.

Die erfindungsgemäße Vorrichtung zum Erhitzen der Würze bei der Bierherstellung vermeidet insbesondere den Einsatz einer zusätzlichen Umwälzpumpe. Für die Umwälzung wird teilweise die Ausschlagleitung aus dem Würzegefäß unter Ausnutzung der bereits vorhandenen Ausschlagpumpe benutzt. Diese Ausschlagpumpe ist aufgrund ihrer ursprünglichen Aufgabe bereits mit ausreichend großer Pumpkapazität ausgestattet. Es sind keine zusätzlichen Pumpen und Sicherheitsvorkehrungen im Zusammenhang mit solchen Pumpen nötig. Die Vorrichtung ist also sehr viel einfacher und kostengünstiger als eine zusätzliche Umwälzleitung mit einer Umwälzpumpe und kann platzsparend installiert werden.

Die erfindungsgemäße Vorrichtung zum Erhitzen der Würze kann bei einer Würzepfanne, einem Whirlpoolbehälter, einer kombinierten Würzepfannen- und Whirlpooleinrichtung sowie für Vorlaufgefäße benutzt werden.

Die Absperrmöglichkeiten in den Rohrleitungen stromabwärts der Abzweigung können durch einzelne Ventile oder ebenso durch einen Dreiwegehahn gebildet werden.

Eine vorteilhafte Ausgestaltung der Erfindung sieht vor, daß die Verbindungsleitung teilweise ein Teil einer Hopfengabeeinrichtung ist und die Ausschlagpumpe 4 eine kombinierte Ausschlag- und Hopfengabepumpe ist.

Durch eine derartige Ausgestaltung ist es möglich, auch Rohrleitungen der Hopfengabeeinrichtung zu verwenden und eine zusätzliche Hopfengabepumpe einzusparen.

Im folgenden wird die erfindungsgemäße Vorrichtung in Verbindung mit den Figuren erläutert. Dabei stellt
- Figur 1: schematisch eine erfindungsgemäße Vorrichtung zum Würzeerhitzen dar und
- Figur 2: schematisch eine konventionelle Einrichtung zum Erhitzen der Würze.

In der folgenden detaillierten Beschreibung wird eine erfindungsgemäße Vorrichtung zum Würzekochen beschrieben. Das Beispiel bezieht sich auf eine Würzepfanne, in der die Würze erhitzt und gekocht wird. Die erfindungsgemäße Vorrichtung ist aber genauso einsetzbar bei einem Vorlaufgefäß oder einer kombinierten Würzekoch-Whirlpooleinrichtung.

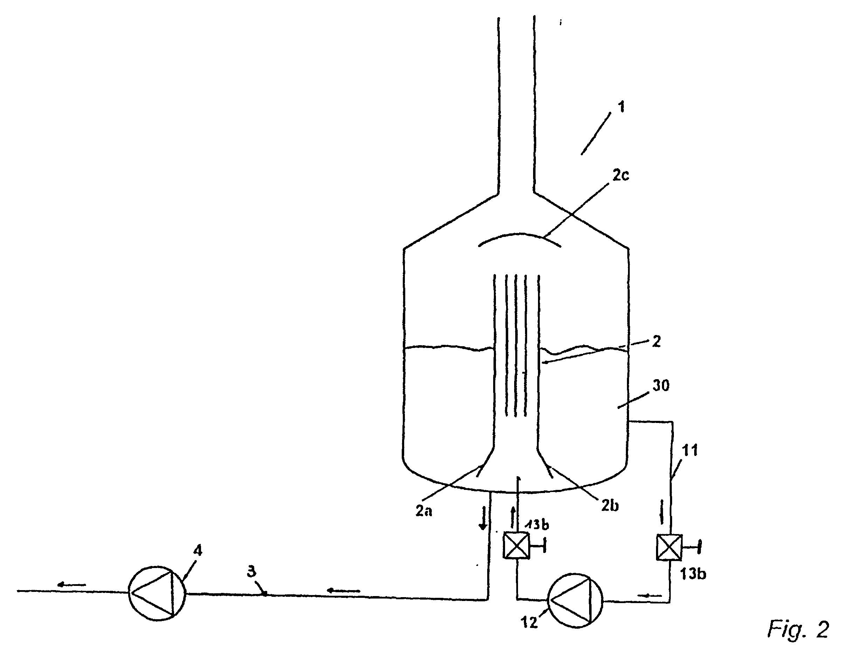

Mit Bezug zu Figur 2 wird im folgenden der Aufheizvorgang in einer konventionellen Vorrichtung beschrieben. Die Würze 30 wird durch eine nicht gezeigte Zuführungsleitung in die Würzepfanne 1 eingeführt. Innerhalb der Würzepfanne 1 befindet sich zentral ein Röhreninnenkocher 2, der z.B. auf Stützen 2a, 2b gelagert ist. Die Würze 30 kann unterhalb dieses Innenkochers gelangen und wird durch das Heizen der darin befindlichen Röhren nach oben gezogen. Beim Austritt aus dem Röhrenkocher 2 wird die Würze z.B. durch eine Prallplatte 2c wieder in der Würzepfanne verteilt. Nachdem der Würze, hier im speziellen Fall der Würzepfanne, Hopfen mit Hilfe einer nicht gezeigten Hopfengabeeinrichtung beigegeben worden ist, wird die Würze durch eine Ausschlagleitung 3 mit einer Ausschlagpumpe 4 abgepumpt. Sie gelangt dann zur Weiterverarbeitung z.B. in den Whirlpoolbehätler.

Während des Aufheizens, im speziellen zu Beginn des Würzeaufheizvorganges, liegt innerhalb des Gefäßes ein Temperaturgradient vor, der dazu führt, daß kein gleichmäßiger linearer Würzeaufheizvorgang in der Würzepfanne 1 stattfindet. Es kann geschehen, daß die Würze aus dem Röhrenkocher 2 intervallweise ausgestoßen wird, wobei die geringe Strömungsgeschwindigkeit zu Ablagerungen innerhalb des Röhrenkochers führen kann, was wiederum die Standzeit des Röhrenkochers und die Würzequalität beeinträchtigt. Die Würze wird deshalb über einen Umwälzkreislauf 11 seitlich aus der Würzepfanne 1 abgezogen und von unten, unterhalb des Röhreninnenkochers 2 wieder in die Würzepfanne eingeführt. In dem Umwälzkreislauf 11 befinden sich entsprechende Absperrventile 13a, b und eine Umwälzpumpe 12. In der Umwälzleitung sind entsprechende Sicherheitsvorkehrungen, wie z.B. Überdruckventile zusätzlich vorzusehen.

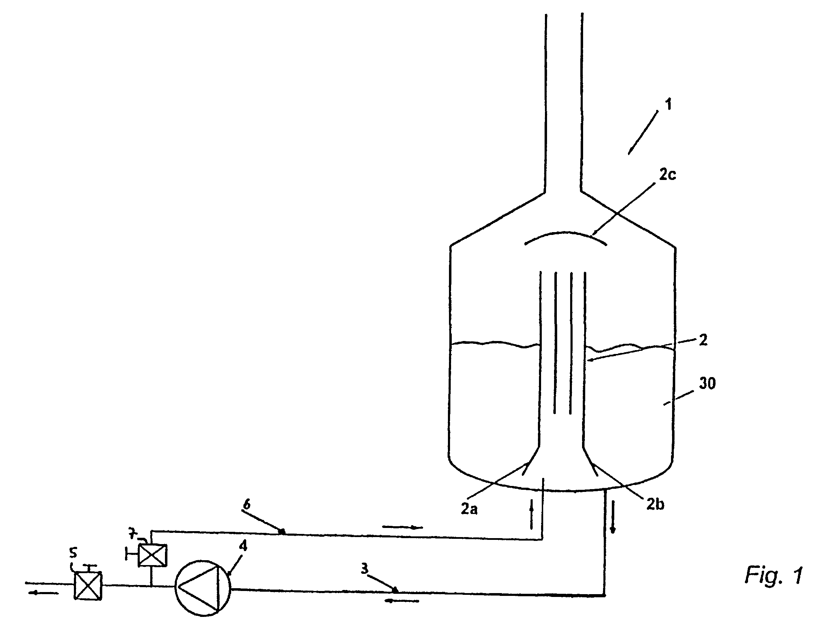

Im Gegensatz zu dieser konventionellen Einrichtung in Figur 2 zeigt Figur 1 eine erfindungsgemäße Vorrichtung zum Würzeerhitzen. Bezugszeichen, die dieselben Einrichtungen wie in Figur 2 beschreiben, sind dabei nicht geändert. Es ist keine separate Umwälzleitung 11 mit entsprechender Pumpe 12 und Ventilen 13a, b vorgesehen. Stromabwärts der Ausschlagpumpe 4 in der Ausschlagleitung 3 zweigt eine Verbindungsleitung 6 ab. Diese Leitung führt unterhalb des Röhreninnenkochers 2 wieder in die Würzepfanne 1. Sie kann mit Hilfe eines Absperrventiles 7 gesperrt werden. Zusätzlich ist wiederum stromabwärts dieser Abzweigung in der Ausschlagleitung ein Absperrventil 5 vorgesehen.

Anstelle der zwei Absperrventile 5 und 7 kann an der Abzweigung der Rohrleitung 6 von der Rohrleitung 3 auch ein entsprechender Dreiwegehahn vorgesehen sein.

Die Umwälzung der Würze, im speziellen während des Aufheizenvorganges, geschieht mit der erfindungsgemäßen Vorrichtung mit Hilfe der Ausschlagpumpe 4 bei geschlossenem Absperrventil 5 und geöffnetem Absperrventil 7. Die Würze wird aus der Würzepfanne abgezogen und direkt unterhalb des Röhrenkochers wieder eingeführt, wo sie von dem heißen Röhrenkocher nach oben getrieben wird. Diese Umpumpbewegung der Würze bewirkt eine Zwangszirkulation, die Ablagerungen oder Festbrennen der Würze innerhalb des Röhrenkochers verhindert.

Soll die Würze aus dem Gefäß 1 abgepumpt werden, so wird das Absperrventil 7 geschlossen, das Absperrventil 5 geöffnet und mit Hilfe der Ausschlagpumpe 4 die Würze durch die Ausschlagleitung 3 zur Weiterverarbeitung gepumpt.

Ebenso ist es möglich, daß die Verbindungsleitung 6 zum Teil einen Teil der Hopfengabeeinrichtung darstellt, die in den anliegenden Figuren nicht gezeigt ist. Entsprechend eingeführte Ventile ermöglichen es gemäß dieser Ausführungsform, daß die vorhandenen Leitungen so geöffnet bzw. abgesperrt werden können, daß eine Umwälzung ohne Hopfengabe stattfinden kann, eine Hopfengabe stattfinden kann oder die Würze aus dem Gefäß 1 ausgeschlagen werden kann. Die Ausschlagpumpe 4 übernimmt in dieser Ausführungsform nicht nur zusätzlich die Aufgabe einer Umwälzpumpe sondern auch die Aufgabe der Hopfengabepumpe.

Unter Ausnutzung der erfindungsgemäßen Vorrichtung ist es möglich, sehr viel billiger und einfacher ein Umwälzen der Würze während des Aufheiz- bzw. Kochvorganges in einem Gefäß zum Erhitzen von Würze bei der Bierherstellung zu ermöglichen. Ein solches Gefäß ist z.B. eine Würzepfanne, ein Vorlaufgefäß oder eine kombinierte Würzekoch- und Whirlpooleinrichtung. Kein zusätzlicher Umwälzkreislauf mit einer zusätzlichen Pumpe ist notwendig. Die Erfindung ermöglicht also einen kostengünstigeren Aufbau und Betrieb.

## Patentansprüche

1. Vorrichtung zum Erhitzen der Würze bei der Bierherstellung innerhalb eines Gefäßes mit Innenkocher, insbesondere Röhreninnenkocher,
**gekennzeichnet durch**
eine Verbindungsleitung (6), die von der Ausschlagleitung (3) stromabwärts der Ausschlagpumpe (4) abzweigt und unterhalb des Innenkochers (2) wieder in das Gefäß (1) zum Erhitzen der Würze (30) mündet, und
je mindestens eine Absperrvorrichtung (5, 7) in der Ausschlagleitung (3) und der Verbindungsleitung (6) stromabwärts der Ausschlagpumpe (4).

2. Vorrichtung zum Erhitzen der Würze nach Anspruch 1,
**dadurch gekennzeichnet, daß**
das Gefäß (1) ein Vorlaufgefäß ist und die Ausschlagleitung (3) zur Würzepfanne oder zu einer kombinierten Würzekochund Whirlpooleinrichtung führt.

3. Vorrichtung zum Erhitzen der Würze nach Anspruch 1,
**dadurch gekennzeichnet, daß**
das Gefäß (1) eine Würzepfanne ist und die Ausschlagleitung (3) zur Whirlpoolanlage führt.

4. Vorrichtung zum Erhitzen der Würze nach Anspruch 1,
**dadurch gekennzeichnet, daß**
das Gefäß (1) eine kombinierte Würzekoch- und Whirlpooleinrichtung ist.

5. Vorrichtung zum Erhitzen der Würze nach einem der vorhergehenden Ansprüche,
**dadurch gekennzeichnet, daß**
die je mindestens einen Absperrmöglichkeiten (5, 7) durch ein kombiniertes Dreiwegeventil gebildet werden.

6. Vorrichtung zum Erhitzen der Würze nach einem der vorhergehenden Ansprüche,
**dadurch gekennzeichnet, daß**
die Verbindungsleitung (6) teilweise ein Teil einer Hopfengabeeinrichtung ist und die Ausschlagpumpe (4) eine kombinierte Ausschlag- und Hopfengabepumpe ist.

## Claims

1. An apparatus for heating wort during brewing inside a vessel comprising an inner boiler, in particular an inner tube-type boiler,
**characterized by**
a connection pipe (6) which is branched off from a casting pipe (3) downstream of a casting pump (4) and terminates again below the inner boiler (2) in a vessel (1) for heating wort (30), and
by at least one respective shut-off device (5, 7) inside said casting pipe (3) and said connection pipe (6) downstream of said casting pump (4).

2. The apparatus for heating wort according to claim 1,
**characterized in that**
said vessel (1) is a pre-run vessel and said casting pipe (3) leads to a wort kettle or to a combined wort boiling and whirlpool apparatus.

3. The apparatus for heating wort according to claim 1,
**characterized in that**
said vessel (1) is a wort kettle and said casting pipe (3) leads to a whirlpool system.

4. The apparatus for heating wort according to claim 1,
**characterized in that**
said vessel (1) is a combined wort boiling and whirlpool apparatus.

5. The apparatus for heating wort according to any one of the preceding claims,
**characterized in that**
the at least one respective shut-off device (5, 7) is formed by a combined three-way valve.

6. The apparatus for heating wort according to any one of the preceding claims,
**characterized in that**
said connection pipe (6) partly forms part of a hop dosing means and said casting pump (4) is a combined casting and hop dosing pump.

## Revendications

1. Dispositif pour chauffer le moût pendant la préparation de la bière à l'intérieur d'une cuve avec cuiseur intérieur, en particulier cuiseur intérieur à tubes, **caractérisé par** une conduite de liaison (6), qui bifurque depuis la conduite de dérivation (3) en aval de la pompe de dérivation (4) et débouche à nouveau dans la cuve (1) pour chauffer le moût (30), et respectivement au moins un dispositif d'arrêt (5, 7) dans la conduite de dérivation (3) et dans la conduite de liaison (6) en aval de la pompe de dérivation (4).

2. Dispositif pour chauffer le moût selon la revendication 1, **caractérisé en ce que** la cuve (1) est une cuve d'alimentation et que la conduite de dérivation (3) conduit à la chaudière d'ébullition ou vers un dispositif combiné formant cuiseur à moût et whirlpool.

3. Dispositif pour chauffer le moût selon la revendication 1, **caractérisé en ce que** la cuve (1) est une chaudière d'ébullition et la conduite de dérivation (3) mène à l'installation whirlpool.

4. Dispositif pour chauffer le moût selon la revendication 1, **caractérisé en ce que** la cuve (1) est un dispositif combiné formant cuiseur à moût et whirlpool.

5. Dispositif pour chauffer le moût selon l'une des revendications précédentes, **caractérisé en ce que** chacune au moins des possibilités d'arrêt (5, 7) est formée par une vanne trois voies combinée.

6. Dispositif pour chauffer le moût selon l'une des revendications précédentes, **caractérisé** en ce la conduite de liaison (6) est partiellement une partie d'un dispositif de houblonnage et la pompe de dérivation (4) est une pompe combinée de dérivation et de houblonnage.
